Europäisches Patentamt

(19) European Patent Office

Office européen des brevets

(11) **EP 1 273 617 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.$^7$: **C08K 5/00**, C08J 3/24, C04B 26/02, C08F 2/44, C09J 4/00

(21) Anmeldenummer: **02405515.4**

(22) Anmeldetag: **21.06.2002**

(54) **Durch Wärmeinitiierung aushärtbare, wenigstens zweikomponentige Mörtelmasse und Verfahren zur Befestigung von Ankerstangen, Betoneisen oder dergleichen in festen Unterlagen**

Thermosetting mortar having at least two components and method for fixing anchor bars, rebars or the like in a solid support

Mortier thermodurcissable à au moins deux composants et procédé de fixation de tiges d'ancrage, fers à béton ou similaires dans un support solide

(84) Benannte Vertragsstaaten:
**AT BE CH CY DE DK ES FI FR GB GR IE IT LI LU MC NL PT SE TR**

(30) Priorität: **04.07.2001 DE 10132336**

(43) Veröffentlichungstag der Anmeldung:
**08.01.2003 Patentblatt 2003/02**

(73) Patentinhaber: **HILTI Aktiengesellschaft**
**9494 Schaan (LI)**

(72) Erfinder:
 • **Bürgel, Thomas**
 **86899 Landsberg am Lech (DE)**
 • **Böck, Marianne**
 **86875 Waal (DE)**

(74) Vertreter: **Wildi, Roland et al**
 **Hilti Aktiengesellschaft,**
 **Feldkircherstrasse 100,**
 **Postfach 333**
 **9494 Schaan (LI)**

(56) Entgegenhaltungen:
 **EP-A- 0 081 972       EP-A- 0 432 087**
 **DE-C- 10 002 367     US-A- 6 037 408**

 • **DATABASE CA [Online] CHEMICAL ABSTRACTS SERVICE, COLUMBUS, OHIO, US; KIM, YONG-HAE ET AL: "Process for the preparation of tetrabutylammonium peroxydisulfate" retrieved from STN Database accession no. 133:164480 XP002233032 & KR 9 600 046 B (KIST, S. KOREA) 3. Januar 1996 (1996-01-03)**

**Beschreibung**

Gegenstand der vorliegenden Erfindung ist eine durch Wärmeinitiierung aushärtbare, wenigstens zweikomponentige Mörtelmasse mit einem Gehalt an mindestens einem polymerisierbaren Monomeren und/oder mindestens einem härtbaren Harz, mindestens einem Polymerisationsinitiator für das polymerisierbare Monomere und/oder das härtbare Harz und gegebenenfalls mindestens einem Füllstoff, sowie ein Verfahren zur Befestigung von Ankerstangen, Betoneisen oder dergleichen in festen Unterlagen unter Verwendung dieser Mörtelmasse.

Zur Befestigung von Ankerstangen, Betoneisen oder ähnlichen Elementen in einem Bohrloch in mineralischen Untergründen, wie Beton- oder Mauerwerk, werden normalerweise Zweikomponenten-Mörtelmassen auf Basis von Methacrylaten oder Epoxidharzen verwendet. Diese Mörtelmassen weisen nach dem Vermischen der miteinander reagierenden Bestandteile eine gewisse Topfzeit auf, während der das zur befestigende Element gesetzt werden kann, und erreichen nach Ablauf einer weiteren Zeitspanne ihre Endfestigkeit. Die genannte Topfzeit liegt unter üblichen Bedingungen im Bereich von einigen Minuten. Die Aushärtung erfolgt in der Regel innerhalb von einigen Minuten bis Stunden. In jedem Fall sind beide Effekte miteinander gekoppelt, d. h. eine längere Topfzeit führt zu einer längeren Aushärtungszeit, wobei diese Zeiten in Abhängigkeit von den Umgebungsbedingungen, namentlich der Temperatur, variieren können.

Zur Überwindung dieser Temperaturabhängigkeit schlägt die ältere deutsche Patentanmeldung 100 02 367.3 eine durch Frontalpolymerisation nach Wärmeinitiierung aushärtbare Mörtelmasse vor, die neben einem polymerisierbaren Monomeren oder härtbaren Harz und gegebenenfalls mindestens einem Füllstoff einen bei einer Temperatur von oberhalb 30°C thermisch aktivierbaren und/oder thermisch freisetzbaren Polymerisationsinitiator für das Monomere und/oder einen Härtungsbeschleuniger für das härtbare Harz enthält, wobei Art und Menge von Monomeren beziehungsweise Harz und Polymerisationsinitiator beziehungsweise Härtungsbeschleuniger derart ausgewählt sind, daß sich nach dem Auslösen der Polymerisation eine Geschwindigkeit der Polymerisationsfront (Frontgeschwindigkeit) von mindestes 10 cm/min ergibt.

Aus der US-A-6,057,406 ist bekannt, daß man bei der Frontalpolymerisation eines Monomerengemisches Tricaprylmethylammoniumpersulfat als Initiator, welcher den Vorteil hat, daß er bei der Zersetzung keine Gase bildet, einsetzen kann. Dieser sehr reaktive Polymerisationsinitiator führt jedoch bereits bei der Lagerung einer Mischung desselben mit polymerisierbaren Monomeren zur Auslösung der Polymerisation.

Weiterhin besteht grundsätzlich, also sowohl für die Frontalpolymerisation als auch für andere Methoden der wärmeinitiierten, radikalischen Polymerisation, ein Widerspruch zwischen der Lagerstabilität des einzusetzenden Mörtels und der notwendigen hohen Reaktivität der Masse. Aus diesem Grunde ist es üblich, die Mörtelbestandteile zumindest zweikomponentig zu formulieren und entweder einen wenig reaktiven Initiator in einer Komponente mit einem Beschleuniger in der zweiten Komponente zu kombinieren oder den aktiven Initiator in einer inerten Substanz (in der Regel einem Weichmacher) vom polymerisierbaren Monomeren bzw. Harz getrennt zu lagern.

Da die verwendeten Weichmacher die mechanischen Eigenschaften des ausgehärteten Mörtels beeinflussen, muß deren Menge gering gehalten werden, was zu für die homogene Vermischung ungünstigen Mischungsverhältnissen von 1:10 bis 1:7 führt. Aus diesem Grunde wurden verschiedene Wege vorgeschlagen, reaktive Trägersubstanzen einzusetzen, die wiederum ganz spezielle Reaktionspartner in der jeweils anderen Komponente notwendig machen.

So ist bereits die Verwendung von Wasser als Trägersubstanz vorgeschlagen worden. Andererseits offenbart die WO-A-94/19397 den Einsatz von Epoxid und/oder Isocyanaten als Trägermaterial.

Da solche Trägermaterialien jedoch aufwendig und nachteilig sind, weil sich Reaktionen mit den übrigen Bestandteilen der Mörtelmasse ergeben können, besteht die der vorliegenden Erfindung zugrunde liegende Aufgabe darin, eine durch Wärmeinitiierung aushärtbare Mörtelmasse anzugeben, welche keine zusätzlichen Trägermaterialien für den Polymerisationsinitiator benötigt und das Problem der homogenen Vermischung löst und bei guter Lagerstabilität eine hohe Reaktivität aufweist und zu homogen ausgehärteten Endprodukten mit hoher mechanischer Festigkeit führt.

Unter Wärmeinitiierung ist dabei zu verstehen, daß die Polymerisationsreaktion der durch das Vermischen der in den getrennten Komponenten vorliegenden Bestandteile erhaltenen Mörtelmasse zu einem beliebigen Zeitpunkt nach deren Bildung durch Wärmezufuhr ausgelöst werden kann, so daß sich eine sehr lange Topfzeit der Mörtelmasse ergibt und deren Aushärtung gezielt zu einem gewünschten Zeitpunkt gestartet werden kann. Hierdurch wird es möglich, zunächst eine große Vielzahl von Bohrlöchern mit der Mörtelmasse zu beschicken, anschließend die Befestigungselemente einzuführen, zu justieren und dann die Härtung zu initiieren, so daß es möglich wird, eine optimale und weitgehend identische Aushärtung und damit weitgehend identische Auszugsfestigkeit der montierten Befestigungselemente zu erreichen.

Es hat sich nunmehr überraschenderweise gezeigt, daß es in sehr einfacher und eleganter Weise möglich ist, diese Aufgabe dadurch zu lösen, daß als Polymerisations-initiator ein organisch substituiertes Ammoniumpersulfat eingesetzt wird, welches jedoch lediglich in Form der erforderlichen Ausgangsmaterialien in getrennten Komponenten der Mörtelmasse vorliegt und erst beim Vermischen der wenigstens zwei Komponenten in situ in der Mörtelmasse gebildet wird. Dabei enthält eine Komponente der Mörtelmasse mindestens ein organisch substituiertes Ammoniumsalz während eine andere Komponente mindestens ein anorganisches Persulfat enthält, welche in sehr schneller Reaktion das organisch substituierte Ammoniumpersulfat bilden, das dann als Initiator für die radikalische Härtung der Mörtelmasse zur Verfügung steht.

Gegenstand der Erfindung ist daher die durch Wärmeinitiierung aushärtbare, wenigstens zweikomponentige Mörtelmasse nach Anspruch 1. Die Unteransprüche betreffen bevorzugte Ausführungsformen dieses Gegenstands sowie ein Verfahren zur Befestigung von Befestigungselementen, wie Ankerstangen, Betoneisen oder dergleichen, in festen Unterlagen unter Verwendung dieser Mörtelmasse.

Die Erfindung betrifft daher eine durch Wärmeinitiierung aushärtbare, wenigstens zweikomponentige Mörtelmasse mit einem Gehalt an

a) mindestens einem polymerisierbaren Monomeren und/oder mindestens einem härtbaren Harz,
b) mindestens einem Polymerisationsinitiator für das polymerisierbare Monomere und/oder das härtbare Harz und
c) gegebenenfalls mindestens einem Füllstoff, welche dadurch gekennzeichnet ist, daß als Polymerisationsinitiator mindestens ein organisch substituiertes Ammoniumsalz als Bestandteil einer Mörtelkomponente und mindestens ein anorganisches Persulfat als Bestandteil einer weiteren Mörtelkomponente, welche nach dem Vermischen der Mörtelkomponenten in situ ein organisch substituiertes Ammoniumpersulfat ergeben, enthalten sind, wobei Art und Menge von organisch substituiertem Ammoniumsalz und anorganischem Persulfat sowie polymerisierbarem Monomerem bzw. härtbarem Harz derart ausgewählt sind, daß eine durch Hitzeeinwirkung radikalisch polymerisierbare Mörtelmasse entsteht.

Gemäß einer bevorzugten Ausführungsform der Erfindung enthält die Mörtelmasse

a) 10 bis 98 Gew.-% mindestens einer Verbindung (A), die mindestens eine polymerisierbare Vinylgruppe aufweist, als polymerisierbares Monomeres bzw. härtbares Harz,
b) 1 bis 15 Gew.-% mindestens eines organisch substituierten Ammoniumsalzes (B).
c) 1 bis 15 Gew.-% mindestens eines anorganischen Persulfats (C),
d) 0 bis 60 Gew.-% mindestens eines Füllstoffs (D),
e) 0 bis 10 Gew.-% mindestens eines Verdickungsmittels (E),
f) 0 bis 30 Gew.-% mindestens eines weiteren bei einer Temperatur von oberhalb 30°C thermisch aktivierbaren und/oder thermisch freisetzbaren Polymerisationsinitiators (F) und einer Selbstbeschleunignungs-Zersetzungstemperatur (SADT) von mindestens 30°C, für dieVinylverbindung (A).
g) 0 bis 10 Gew.-% mindestens eines Polymerisationsbeschleunigers (G) und
h) 0 bis 10 Gew.-% mindestens eines Lösungs- oder Verdünnungsmittels (H), wobei das organisch substituierte Ammoniumsalz (B) und das anorganische Persulfat (C) in voneinander hermetisch getrennten Komponenten vorliegen.

Die erfindungsgemäß eingesetzten polymerisierbaren Monomeren bzw. härtbaren Harze werden vorzugsweise ausgewählt aus: Acrylsäure, Methacrylsäure, Styrol, Divinylbenzol, Vinylacetat, Acrylamid, Übergangsmetallnitrat/Acrylamid-Komplexen, Acrylaten, wie Butylacrylat, 2-(2-Ethoxyethoxy)ethylacrylat (EOEOEA), Tetrahydrofurfurylacrylat (THFA), Laurylacrylat, Phenoxyethylacrylat, Isodecylacrylat, Tridecylacrylat, ethoxyliertem Nonylphenolacrylat, Isobornylacrylat (IBOA), ethoxyliertem Bisphenol-A-diacrylat, Polyethylenglykoldiacrylat (PEGDA), alkoxyliertem Diacrylat, propoxyliertem Neopentylglykoldiacrylat (NPGPODA), ethoxyliertem Neopentylglykoldiacrylat (NPGEODA), Hexan-1,6-dioldiacrylat (HDDA), Tetraethylenglykoldiacrylat (TTEGDA). Triethylenglykoldiacrylat (TIEGDA), Tripropylenglykoldiacrylat (TPGDA), Dipropylenglykoldiacrylat (DPGDA), Ditrimethylolpropantetraacrylat (DiTMP TTA), Tris-(2-hydroxyethyl)-isocyanurattriacrylat (THEIC-TA), Dipentaerythritolpentaacrylat (DiPEPA), ethoxyliertem Trimethylolpropan-triacrylat (TMPEOTA), propoxyliertem Trimethylolpropantriacrylat (TMPPOTA), ethoxyliertem Pentaerythritoltetraacrylat (PPTTA), propoxyliertem Glyceryltriacrylat (GPTA), Pentaerythritoltetraacrylat (PETTA), Trimethylolpropantriacrylat (TMPTA) und modifiziertem Pentaerythritoltriacrylat; Methacrylaten, wie Allylmethacrylat (AMA), Tetrahydrofurfurylmethacrylat (THFMA), Phenoxyethylmethacrylat, Isobornylmethacrylat, Methylmethacrylat (MMA), Triethylenglykoldimethacrylat (TIEGDMA), Ethylenglykoldimethacrylat (EGDMA), Tetraethylenglykoldimethacrylat (TTEGDMA), Polyethylenglykoldimethacrylat (PEGDMA), Butandioldimethacrylat (BDDMA), Diethylenglykoldimethacrylat (DEGDMA), Hexandioldimethacrylat (HDDMA), Polyethylenglykoldimethacrylat (PEG600DMA), Butylenglykoldimethacrylat (BGDMA), ethoxyliertem Bisphenol-A-dimethacrylat, Trimethylolpropantrimethacrylat (TMPTMA); und/oder Oligomeren oder Präpolymeren, wie Bisphenol-A-epoxyacrylat, epoxidiertem Sojabohnenölacrylat, Epoxy-Novolakacrylat-Oligomeren, fettsäuremodifiziertem Bisphenol-A-epoxyacrylat, aromatischem Monoacrylat-Oligomer, aliphatischem Diacrylat-Oligomer, tetrafunktionellem Epoxyacrylat, Amin-modifiziertem Polyetheracrylat-Oligomer, aliphatischem Urethantriacrylat, aliphatischem Urethantetraacrylat, aliphatischem Urethandiacrylat, hexafunktionelles aromatisches Urethanacrylat, aromatischem Urethandiacrylat, aromatischem Urethantetraacrylat und tetrafunktionellem Polyesteracrylat.

Gemäß einer besonders bevorzugten Ausführungsform der Erfindung enthält die Mörtelmasse als mindestens eine polymerisierbare Vinylgruppe aufweisende Verbindung (A) Acrylsäure, Methacrylsäure, einen Acrylsäureester, wie n-Butylacrylat, Hexan-1,6-dioldiacrylat, Trimethylolpropantriacrylat oder Pentaerythritoltetraacrylat, einen Methacrylsäureester, wie Methylmethacrylat, Triethylenglykoldimethacrylat, Diethylenglykoldimethacrylat, Triethylenglykoldimethacrylat oder Trimethylolpropantrimethacrylat, Styrol, Divinylbenzol, Vinylacetat, Acrylamid, einen Übergangsmetallnitrat/Acrylamid-Komplex, ein oligomeres aliphatisches Urethan-(meth)acrylat, Epoxy-(meth)acrylat, Polyether-(meth)acrylat und/oder ein Polyester-(meth)acrylat.

Weiterhin ist es bevorzugt, als organisch substituiertes Ammoniumsalz (B) ein Tri- oder insbesondere Tetraalkyl-, -aryl- oder -aryl-alkylammoniumsalz, beispielsweise ein -halogenid wie z.B. -chlorid, -acetat, -(meth)acrylat und/oder -hydrogensulfat einzusetzen. Besonders bevorzugt ist die Verwendung von Tetrabutylammoniumchlorid, Benzyltriethylammoniumchlorid, Tetrabutylammonium-hydrogensulfat, Tetradecyldimethylbenzylammoniumchlorid oder Trimethyl-caprylammoniumchlorid oder von Mischungen dieser Verbindungen.

Als anorganisches Persulfat (C) wird bevorzugt Natrium-, Kalium-, nicht oder schwach substituiertes Ammoniumpersulfat, wie Mono- oder Dialkyl-, -aryloder/und -arylalkylammoniumpersulfat verwendet.

Es ist bevorzugt, daß die beschriebene Mötelmasse als Füllstoff (D) Quarzsand, Quarzmehl, pyrogenes Siliciumdioxid, Korund, Glaskügelchen, ein Carbonat, ein Sulfat, Zement, ein Metallpulver oder -granulat, ein hydratisiertes Schichtsilikat, wie Montmorillonit, Hectorit und Bentonit, einen organischen Füllstoff und/oder Mischungen davon enthält.

Als Verdickungsmittel (E) wird bevorzugt Kieselsäure und/oder ein Silikat, wie Laponit oder Bentonit verwendet.

Nach einer weiteren bevorzugten Ausführungsform der Erfindung ist es möglich, der Mörtelmasse als zusätzlichen Polymerisationsinitiator (F) zur Verbesserung der Härtung ein Peroxid, insbesondere ein Dialkylperoxid, wie Di-tert-butylperoxid, ein Diacylperoxid, wie Dibenzoylperoxid, ein Hydroperoxid, wie tert-Butylhydroperoxid oder Cumolhydroperoxid, einen Percarbonsäureester, wie Butylperbezoat, ein Perketal, wie 1,1-Di-tert-butyl-peroxy-3,3,5-trimethylcyclohexan, und/oder eine Azoverbindung, wie Azobisisobutyronitril, mit einer Selbstbeschleunigungs-Zersetzungstemperatur (SADT) von mindestens 30°C, vorzugsweise von 55 bis 120°C, zuzusetzen.

Weiterhin ist es bevorzugt, im Fall des Einsatzes eines Polymerisationsbeschleunigers (G) einen solchen zu verwenden, der bei einer Temperatur von oberhalb 30°C, vorzugsweise in einem Temperaturbereich von 55 bis 120°C, thermisch aktivierbar und/oder thermisch freisetzbar ist. Hierbei handelt es sich insbesondere um ein Amin, vorzugsweise ein tertiäres Amin, wie Dimethylanilin und/oder eine Metallverbindung, wie eine Cobalt- oder Vanadiumverbindung.

Des weiteren ist es möglich, zur Einstellung der Viskosität zusätzlich ein inertes Lösungs- und/oder Verdünnungsmittel (L) einzuarbeiten, beispielsweise einen Weichmacher, insbesondere ein Dialkylphthalat oder Dialkyladipat, und/oder Dimethylformamid.

Ein weiterer Gegenstand der vorliegenden Erfindung ist ein Verfahren zur Befestigung von Befestigungselementen, wie Ankerstangen, Betoneisen oder dergleichen, in festen Unterlagen, welches dadurch gekennzeichnet ist, daß man die oben definierte Mörtelmasse in das Dübelloch einbringt, die Ankerstange, das Betoneisen oder dergleichen einführt und die Aushärtung durch Erwärmen der Mörtelmasse auslöst.

Hierbei kann das Vermischen der Komponenten der Mörtelmasse z.B. mittels eines Statikmischers erfolgen, was zur Folge hat, daß das organisch substituierte Ammoniumsalz der einen Mörtelkomponente mit dem anorganischen Persulfat der mindestens einer weiteren Mörtelkomponente spontan in situ zu dem entsprechenden organisch substituierten Ammoniumpersulfat ausreagiert, so daß eine durch Hitzeinwirkung radikalisch polymerisierbare Mörtelmasse entsteht. Diese Mörtelmasse wird dann in das Dübelloch eingebracht, das zuvor in der festen Unterlage, an der das Befestigungselement befestigt werden soll, vorgesehen worden ist. Anschließend wird die Ankerstange, das Betoneisen oder ein ähnliches Befestigungselement in das mit der Mörtelmasse beschickte Dübelloch eingeführt, worauf die Aushärtung durch Erhitzen der Mörtelmasse auf eine Temperatur oberhalb der Reaktionstemperatur des Persulfates, gegebenenfalls des zusätzlichen Polymerisationsinitiators und/oder Polymerisationsbeschleunigers ausgelöst wird.

Die Wärmeinitiierung kann dabei durch punktuelles oder flächiges Erhitzen der Oberflächenschicht der Mörtelmasse oder durch Wärmezufuhr in das Innere der Mörtelmasse ausgelöst werden. Dabei ist es möglich, die Wärmeinitiierung der Mörtelmasse durch Wärmeeintrag über ein wärmeleitendes Befestigungselement zu bewirken, sei es durch Wärmeleitung, durch Widerstandsheizung oder aber mit Hilfe eines z.B. über das Befestigungselement eingestrahlten Energiefeldes, wie eines elektrischen, magnetischen oder elektromagnetischen Feldes, beispielsweise durch Mikrowellenstrahlung.

Bei der Durchführung des erfindungsgemäßen Verfahrens erfolgt die Auswahl der Dimensionen von Bohrloch und Ankerstange entsprechend dem Stand der Technik für Injektionssysteme. Dabei wird eine solche Menge der erfindungsgemäßen Mörtelmasse in das vorbereitete Bohrloch eingebracht, daß der Ringspalt nach dem Setzen des zu befestigenden Elements vollständig ausgefüllt ist. Erfindungsgemäß ist ein Justieren des Elements möglich, da die Mörtelmasse erst nach kurzzeitigem Erhitzen während einiger Sekunden auf mindestens 80°C aushärtet.

In dieser Weise wird es möglich, eine große Vielzahl von Befestigungselementen in vorbereitete und bereits mit der Mörtelmasse ausgefüllte Dübellöcher einzubringen und nach Befestigung und Ausrichtung sämtlicher Befestigungselemente durch die angesprochene Wärmeinitiierung eine schnelle und vollständige und vor allem gleichmäßige Aushärtung der Mörtelmasse zu bewirken und damit eine hohe Gleichmäßigkeit und Konstanz der Festigkeit der gesetzten Befestigungselemente zu erreichen.

Die folgenden Beispiele dienen der weiteren Erläuterung der Erfindung.

Beispiel 1

Durch Frontalpolymerisation ausgehärtete Masse; Mischungsverhältnis Komponente A : Komponente B 1:1

|  | Gesamt | Komponente A | Komponente B |
|---|---|---|---|
| Pentaerythrittetraacrylat (SR 295) | 86 | 45 | 41 |
| modifizierte Kieselsäure (Cab-O-Sil) | 2 | 1 | 1 |
| Ammoniumpersulfat | 8 | 0 | 8 |
| Tetrabutylammoniumchlorid | 4 | 4 | 0 |
|  | $\overline{100}$ | $\overline{50}$ | $\overline{50}$ |

Zunächst werden unter Anwendung der in der obigen Tabelle angegebenen Bestandteile die Komponenten A und B getrennt hergestellt.

Nach dem Vermischen der beiden Komponenten mit Hilfe eines Statikmischers erhält man eine radikalisch polymerisierbare Mörtelmasse, da das Ammoniumpersulfat spontan mit dem Tetrabutylammoniumchlorid reagiert unter Bildung von Tetrabutylammoniumpersulfat. Die in dieser Weise erhaltene Mörtelmasse wird nach dem Austritt aus dem Statikmischer in ein Bohrloch in Beton der Qualität C20 mit einer Bohrlochtiefe von 130 mm und einem Bohrlochdurchmesser von 14 mm eingebracht. Nach dem Einführen einer Ankerstange mit einem Außendurchmesser von 12 mm und dem Auslösen der Polymerisation durch Erhitzen der an der Bohrlochoberseite vorliegenden Mörtelmasse mit Hilfe eines Lötkolbens auf eine Temperatur von 150°C, ergibt sich eine vollständige Aushärtung der Masse innerhalb eines Zeitraums von 30 Sekunden. Die Auszugskraft der Ankerstange nach dem Aushärten beträgt etwa 29,5 kN.

**Beispiel 2**

Durch Frontalpolymerisation ausgehärtete Masse; Mischungsverhältnis Komponente A : Komponente B 1:1

|  | Gesamt | Komponente A | Komponente B |
|---|---|---|---|
| Pentaerythrittetraacrylat (SR 295) | 66,25 | 33,75 | 32,5 |
| modifizierte Kieselsäure (Cab-O-Sil) | 2,75 | 1,75 | 1 |
| Quarzsand | 15 | 7,5 | 7,5 |
| Dimethylformamid | 3 | 3 | 0 |
| Peroxid (DHBP (45 %) Trigenox 101) | 1 | 0 | 1 |
| Ammoniumpersulfat | 8 | 0 | 8 |
| Tetrabutylammoniumchlorid | 4 | 4 | 0 |
|  | $\overline{100}$ | $\overline{50}$ | $\overline{50}$ |

Zunächst werden unter Anwendung der in der obigen Tabelle angegebenen Bestandteile die Komponenten A und B getrennt hergestellt.

Nach Vermischen der beiden Komponenten der Mörtelmasse wird diese nach der in Beispiel 1 beschriebenen Weise zur Befestigung einer Ankerstange in einem Beton- Bohrloch eingesetzt. Die Auszugskraft der Ankerstange nach dem Aushärten beträgt etwa 39 kN.

**Patentansprüche**

1. Durch Wärmeinitiierung aushärtbare, wenigstens zweikomponentige Mörtelmasse mit einem Gehalt an

  a) mindestens einem polymerisierbaren Monomeren und/oder mindestens einem härtbaren Harz,
  b) mindestens einem Polymerisationsinitiator für das polymerisierbare Monomere und/oder das härtbare Harz und
  c) gegebenenfalls mindestens einem Füllstoff, **dadurch gekennzeichnet, daß** als Polymerisationsinitiator mindestens ein organisch substituiertes Ammoniumsalz als Bestandteil einer Mörtelkomponente und mindestens ein anorganisches Persulfat als Bestandteil einer weiteren Mörtelkomponente, welche nach dem Vermischen der Mörtelkomponenten in situ ein organisch substituiertes Ammoniumpersulfat ergeben, enthalten sind, wobei Art und Menge von organisch substituiertem Ammoniumsalz und anorganischem Persulfat sowie polymerisierbarem Monomerem bzw. härtbarem Harz derart ausgewählt sind, daß eine durch Hitzeinwirkung radikalisch polymerisierbare Mörtelmasse entsteht.

2. Mörtelmasse nach Anspruch 1, **dadurch gekennzeichnet, daß** sie

  a) 10 bis 98 Gew.-% mindestens einer Verbindung (A), die mindestens eine polymerisierbare Vinylgruppe aufweist, als polymerisierbares Monomeres bzw. härtbares Harz,
  b) 1 bis 15 Gew.-% mindestens eines organisch substituierten Ammoniumsalzes (B),
  c) 1 bis 15 Gew.-% mindestens eines anorganischem Persulfats (C),
  d) 0 bis 60 Gew.-% mindestens eines Füllstoffs (D),
  e) 0 bis 10 Gew.-% mindestens eines Verdickungsmittels (E),
  f) 0 bis 30 Gew.-% mindestens eines weiteren bei einer Temperatur von oberhalb 30°C thermisch aktivierbaren und/oder thermisch freisetzbaren Polymerisationsinitiators(F) und einer Selbstbeschleunignungs-Zersetzungstemperatur (SADT) von mindestens 30°C, für dieVinylverbindung (A),
  g) 0 bis 10 Gew.-% mindestens eines Polymerisationsbeschleunigers (G) und
  h) 0 bis 10 Gew.-% mindestens eines Lösungs- oder Verdünnungsmittels (H) enthält, wobei das organisch substituierte Ammoniumsalz (B) und das anorganische Persulfat (C) in voneinander hermetisch getrennten Komponenten vorliegen.

3. Mörtelmasse nach Anspruch 2, **dadurch gekennzeichnet, daß** sie als polymerisierbare Vinylverbindung (A) Acrylsäure, Methacrylsäure, einen Acrylsäureester, vorzugsweise n-Butylacrylat, Hexan-1,6-dioldiacrylat, Trimethylolpropantriacrylat oder Pentaerythritoltetraacrylat, einen Methacrylsäureester, vorzugsweise Methylmethacrylat, Butandioldimethacrylat, Triethylenglykoldimethacrylat, Diethylenglykoldimethacrylat, Triethylenglykoldimethacrylat oder Trimethylolpropantrimethacrylat, Styrol, Divinylbenzol, Vinylacetat, Acrylamid, einen Übergangsmetallnitrat/Acrylamid-Komplex, ein oligomeres aliphatisches Urethan-(meth)acrylat, Epoxy-(meth)acrylat, Polyether-(meth)acrylat und/oder ein Polyester-(meth)acrylat enthält.

4. Mörtelmasse nach mindestens einem der Ansprüche 1 bis 3, **dadurch gekennzeichnet, daß** sie als organisch substituiertes Ammoniumsalz (B) ein Tri- oder Tetraalkyl, -aryl, oder -aryl-alkylammoniumhalogenid, -acetat. -(hydrogen)carbonät, -(hydrogen)phosphat, -(hydrogen)sulfat, -(meth)acrylat, vorzugsweise Tetrabutylammoniumchlorid, Benzyltriethylammoniumchlorid, Tetrabutylammonium - hydrogensulfat. Tetradecyldimethylbenzyl-ammoniumchlorid oder Trimethylcaprylammoniumchlorid oder Mischungen dieser Verbindungen enthält.

5. Mörtelmasse nach mindestens einem der Ansprüche 1 bis 3, **dadurch gekennzeichnet, daß** sie als anorganisches Persulfat (C) Ammonium-, Kalium-oder Natriumpersulfat oder Mischungen dieser Stoffe enthält.

6. Mörtelmasse nach mindestens einem der vorhergehenden Ansprüche, **dadurch gekennzeichnet, daß** sie als Füllstoff (D) Quarzsand, Quarzmehl, pyrogenes Siliciumdioxid, Korund, Glaskügelchen, ein Carbonat, ein Sulfat, Zement, ein Metallpulver oder -granulat, ein hydratisiertes Schichtsilikat, wie Montmorillonit, Hectorit und Bentonit, einen organischen Füllstoff und/oder Mischungen davon enthält.

7. Mörtelmasse nach mindestens einem der Ansprüche 2 bis 6, **dadurch gekennzeichnet, daß** sie als Verdickungsmittel (E) Kieselsäure und/oder ein Silikat, wie Laponit oder Bentonit enthält.

8. Mörtelmasse nach den Ansprüchen 2 bis 7 **dadurch gekennzeichnet, daß**sie als zusätzlichen Polymerisationsinitiator (F) ein Peroxid, insbesondere ein Dialkylperoxid, vorzugsweise Di-tert-butylperoxid, ein Diacylperoxid, vorzugsweise Dibenzoylperoxid, ein Hydroperoxid, vorzugsweise tert-Butylhydroperoxid oder Cumolhydroperoxid, einen Percarbonsäureester, vorzugsweise Butylperbezoat, ein Perketal, vorzugsweise 1,1-Di-tert-butyl-peroxy-3,3,5-trimethylcyclohexan, und/oder eine Azoverbindung, vorzugsweise Azobisisobutyronitril, mit einer Selbstbeschleunigungs-Zersetzungstemperatur (SADT) von mindestens 30°C, vorzugsweise von 55 bis 80°C, enthält.

**9.** Mörtelmasse nach mindestens einem der Ansprüche 2 bis 8, **dadurch gekennzeichnet, daß** sie als Polymerisationsbeschleuniger (G) ein Amin, vorzugsweise ein tertiäres Anilin, vorzugsweise Dimethylanilin, ein Sulfid. Thioharnstoff oder ein Mercaptan und/oder eine Metallverbindung, vorzugsweise eine Cobaltverbindung, enthält.

**10.** Mörtelmasse nach mindestens einem der Ansprüche 2 bis 9, **dadurch gekennzeichnet, daß** sie als inertes Lösungsmittel (H) einen Weichmacher, insbesondere ein Dialkylphthalat oder Dialkyladipat, Wasser und/oder Dimethylformamid enthält.

**11.** Verfahren zur Befestigung von Ankerstangen, Betoneisen oder dergleichen in festen Unterlagen, **dadurch gekennzeichnet, daß** man die Mörtelmasse nach mindestens einem der vorhergehenden Ansprüche in das Dübelloch einbringt, die Ankerstange, das Betoneisen oder dergleichen einführt und die Aushärtung durch Erwärmen der Mörtelmasse auslöst.

**12.** Verfahren nach Anspruch 11, **dadurch gekennzeichnet, daß** das Erwärmen der Mörtelmasse durch Energieeintrageintrag über das Befestigungselement ausgelöst wird.

**13.** Verfahren nach den Ansprüchen 11 oder 12, **dadurch gekennzeichnet, daß** der Wärmeeintrag über eine Widerstandsheizung und/oder ein elektrisches, magnetisches oder elektromagnetisches Feld erfolgt.

**Claims**

**1.** Thermosetting mortar having at least two components and a content of

    a) at least one polymerizable monomer and/or at least one curable resin,
    b) at least one polymerization initiator for the polymerizable monomer and/or curable resin and
    c) if necessary at least one filler, **characterized in that**, as polymerization initiator, at least one organically substituted ammonium salt is included as a constituent of one mortar component and at least one inorganic persulphate is included as a constituent of a further mortar component which, after the mortar components have been mixed together in situ, produce an organically substituted ammonium persulphate, the type and quantity of organically substituted ammonium salt and inorganic persulphate as well as polymerizable monomer or curable resin being such that a mortar is produced which can be radically polymerized under the influence of heat.

**2.** Mortar according to Claim 1, **characterized in that** it contains

    a) 10 to 98% by wt. of at least one compound (A), which comprises at least one polymerizable vinyl group, as polymerizable monomer or curable resin,
    b) 1 to 15% by wt. of at least one organically substituted ammonium salt (B),
    c) 1 to 15% by wt. of at least one inorganic persulphate (C),
    d) 0 to 60% by wt. of at least one filler (D),
    e) 0 to 10% by wt. of at least one thickening agent (E),
    f) 0 to 30% by wt. of at least one additional polymerization initiator (F) which can be thermally activated and/or thermally released at a temperature of more than 30°C and a self-accelerating decomposition temperature (SADT) of at least 30°C, for the vinyl compound (A),
    g) 0 to 10% by wt. of at least one polymerization accelerator (G) and
    h) 0 to 10% by wt. of at least one solvent or thinning agent (H), the organically substituted ammonium salt (B) and the inorganic persulphate (C) being present in components which are hermetically separated from one another.

**3.** Mortar according to Claim 2, **characterized in that**, as polymerizable vinyl compound (A), it contains acrylic acid, methacrylic acid, an acrylic ester, preferably n-butyl acrylate, hexane-1,6-diol diacrylate, trimethylol propane triacrylate or pentaerythritol tetra-acrylate, a methacrylic ester, preferably methyl methacrylate, butane diol dimethacrylate, triethylene glycol dimethacrylate, diethylene glycol dimethacrylate, triethylene glycol dimethacrylate or trimethylol propane trimethacrylate, styrene, divinyl benzene, vinyl acetate, acrylamide, a transition metal nitrate/acrylamide complex, an oligomeric aliphatic urethane (meth)acrylate, epoxy (meth)acrylate, polyether (meth)acrylate and/or a polyester (meth)acrylate.

4. Mortar according to at least one of Claims 1 to 3, **characterized in that**, as organically substituted ammonium salt (B), it contains a tri- or tetra-alkyl, -aryl, or -aryl-alkyl ammonium-halogenide, -acetate, -(hydrogen) carbonate, -(hydrogen) phosphate, -(hydrogen) sulphate, -(meth)acrylate, preferably tetrabutyl ammonium chloride, benzyl triethyl ammonium chloride, tetrabutyl ammonium hydrogen sulphate, tetradecyl dimethyl benzyl ammonium chloride or trimethyl capryl ammonium chloride or mixtures of these compounds.

5. Mortar according to at least one of Claims 1 to 3, **characterized in that**, as inorganic persulphate (C), it contains ammonium persulphate, potassium persulphate or sodium persulphate or mixtures of these substances.

6. Mortar according to at least one of the preceding claims, **characterized in that**, as filler (D), it contains quartz sand, powdered quartz, pyrogenic silicon dioxide, corundum, small glass beads, a carbonate, a sulphate, cement, a metal powder or granulate, a hydrated stratified silicate, such as montmorillonite, hectorite and bentonite, an organic filler and/or mixtures thereof.

7. Mortar according to at least one of Claims 2 to 6, **characterized in that**, as thickening agent (E), it contains silica and/or a silicate, such as laponite or bentonite.

8. Mortar according to Claims 2 to 7, **characterized in that**, as additional polymerization initiator (F), it contains a peroxide, in particular a dialkyl peroxide, preferably di-tert-butyl peroxide, a diacyl peroxide, preferably dibenzoyl-peroxide, a hydroperoxide, preferably tert-butyl hydroperoxide or cumene hydroperoxide, a percarboxylic acid ester, preferably butyl perbezoate, a perketal, preferably 1,1-di-tert-butyl-peroxy-3,3,5-trimethyl-cyclohexane, and/or an azo compound, preferably azo-bisisobutyronitrile, with a self-accelerating decomposition temperature (SADT) of at least 30°C, and preferably 55 to 80°C.

9. Mortar according to at least one of Claims 2 to 8, **characterized in that**, as polymerization accelerator (G), it contains an amine, preferably a tertiary aniline, preferably dimethyl aniline, a sulphide, thiocarbamide or a mercaptan and/or a metal compound, preferably a cobalt compound.

10. Mortar according to at least one of Claims 2 to 9, **characterized in that**, as inert solvent (H), it contains a softener, in particular a dialkyl phthalate or dialkyl adipate, water and/or dimethyl formamide.

11. Method of fixing anchor rods, reinforcing iron or the like in solid foundations, **characterized in that** the mortar according to at least one of the preceding claims is introduced into the anchor hole, the anchor rod, reinforcing iron or the like is inserted and curing is initiated by heating of the mortar.

12. Method according to Claim 11, **characterized in that** the mortar is heated by introducing energy via the fixing element.

13. Method according to Claims 11 or 12, **characterized in that** the heat is introduced by way of resistance heating and/or an electric, magnetic or electromagnetic field.

**Revendications**

1. Composition de mortier thermodurcissable, à au moins deux composants ayant une teneur en

   a) au moins un monomère polymérisable et/ou au moins une résine durcissable,
   b) au moins un amorceur de polymérisation pour le monomère polymérisable et/ou la résine durcissable et
   c) le cas échéant au moins une charge,

   **caractérisée en ce qu'**elle contient comme amorceur de polymérisation au moins un sel d'ammonium organique substitué comme constituant d'un composant du mortier et au moins un persulfate inorganique comme constituant d'un autre composant du mortier, dans laquelle après le mélange des composants du mortier on obtient in situ un persulfate d'ammonium organique substitué, le type et la quantité de sel d'ammonium organique substitué et de persulfate inorganique ainsi que de monomère polymérisable ou de résine durcissable étant choisis de manière à former une composition de mortier polymérisable par voie radicalaire sous l'action de la chaleur.

2. Composition de mortier selon la revendication 1, **caractérisée en ce qu'elle** contient

    a) 10 à 98% en poids d'au moins un composé (A), qui présente au moins un groupe vinyle polymérisable, comme monomère polymérisable ou résine durcissable,
    b) 1 à 15 % en poids d'au moins un sel d'ammonium organique substitué (B),
    c) 1 à 15 % en poids d'au moins un persulfate inorganique (C),
    d) 0 à 60 % en poids d'au moins une charge (D),
    e) 0 à 10 % en poids d'au moins un agent épaississant (E),
    f) 0 à 30 % en poids d'au moins un autre amorceur de polymérisation (F) activable thermiquement et/ou libérable thermiquement à une température au-dessus de 30 °C et ayant une température de décomposition par auto-accélération (SADT) d'au moins 30 °C, pour le composé vinyle (A),
    g) 0 à 10 % en poids d'au moins un accélérateur de polymérisation (G) et
    h) 0 à 10 % en poids d'au moins un solvant ou diluant (H),

le sel d'ammonium organique substitué (B) et le persulfate inorganique (C) étant dans des composants hermétiquement séparés l'un de l'autre.

3. Composition de mortier selon la revendication 2, **caractérisée en ce qu'**elle contient comme composé vinyle polymérisable (A) l'acide acrylique, l'acide méthacrylique, un ester d'acide acrylique, de préférence l'acrylate de n-butyle, le diacrylate d'hexane-1,6-diol, le triacrylate de triméthylolpropane ou le tétraacrylate de pentaérythritol, un ester d'acide méthacrylique, de préférence le méthacrylate de méthyle, le diméthacrylate de butanediol, le diméthacrylate de triéthylèneglycol, le diméthacrylate de diéthylèneglycol, le diméthacrylate de triéthylèneglycol ou le triméthacrylate de triméthylolpropane, le styrène, le divinylbenzène, l'acétate de vinyle, l'acrylamide, un complexe nitrate de métal de transition/acrylamide, un (méth)acrylate d'uréthane aliphatique oligomère, un époxy-(méth)acrylate, un polyéther-(méth)acrylate et/ou un polyester-(méth)acrylate.

4. Composition de mortier selon au moins l'une des revendications 1 à 3, **caractérisée en ce qu'**elle contient comme sel d'ammonium organique substitué (B) un halogénure, acétate, (hydrogéno)carbonate, (hydrogéno)phosphate, (hydrogéno)sulfate, (méth)acrylate de tri- ou tétraalkyl, -aryl, ou -aryl-alkylammonium, de préférence le chlorure de tétrabutylammonium, chlorure de benzyl-triéthylammonium, hydrogénosulfate de tétrabutylammonium, chlorure de tétradécyldiméthylbenzylammonium ou chlorure de triméthylcaprylammonium ou des mélanges de ces composés.

5. Composition de mortier selon au moins l'une des revendications 1 à 3, **caractérisée en ce qu'elle** contient comme persulfate inorganique (C) le persulfate d'ammonium, de potassium ou de sodium ou des mélanges de ces substances.

6. Composition de mortier selon au moins l'une des revendications précédentes, **caractérisée en ce qu'**elle contient comme charge (D) du sable silicieux, de la farine de silice, du dioxyde de silicium pyrogène, du corindon, des billes de verre, un carbonate, un sulfate, du ciment, une poudre ou un granulat de métal, un silicate lamellaire hydraté, comme la montmorillonite, l'hectorite et la bentonite, une charge organique et/ou des mélanges de ceux-ci.

7. Composition de mortier selon au moins une des revendications 2 à 6, **caractérisée en ce qu'**elle contient comme agent épaississant (E) l'acide silicique et/ou un silicate comme la laponite ou la bentonite.

8. Composition de mortier selon les revendications 2 à 7, **caractérisée en ce qu'**elle contient comme amorceur de polymérisation additionnel (F) un peroxyde, en particulier un peroxyde de dialkyle, de préférence le peroxyde de di-tert.-butyle, un peroxyde de diacyle, de préférence le peroxyde de dibenzoyle, un hydroperoxyde, de préférence l'hydroperoxyde de tert.-butyle ou l'hydroperoxyde de cumène, un ester d'acide percarboxylique, de préférence le perbenzoate de butyle, un percétal, de préférence le 1,1-di-tert.-butyl-peroxy-3,3,5-triméthylcyclohexane, et/ou un composé azoïque, de préférence l'azobisisobutyronitrile, avec une température de décomposition d'auto-accélération (SADT) d'au moins 30 °C, de préférence de 55 à 80 °C.

9. Composition de mortier selon au moins l'une des revendications 2 à 8, **caractérisée en ce qu'**elle contient comme accélérateur de polymérisation (G) une amine, de préférence une aniline tertiaire, de préférence la diméthylaniline, un sulfure, la thiourée ou un mercaptan et/ou un composé métallique, de préférence un composé du cobalt.

10. Composition de mortier selon au moins l'une des revendications 2 à 9, **caractérisée en ce qu'**elle contient comme solvant inerte (H) un assouplissant, en particulier un phtalate de dialkyle ou adipate de dialkyle, de l'eau et/ou le diméthylformamide.

11. Procédé de fixation de tiges d'ancrage, de fers à béton ou similaires dans des supports solides, **caractérisé en ce que** l'on place la composition de mortier selon au moins l'une des revendications précédentes dans le trou de cheville, on introduit la tige d'ancrage, le fer à béton ou analogue et on démarre le durcissement par chauffage de la composition de mortier.

12. Procédé selon la revendication 11, **caractérisé en ce que** l'on démarre le chauffage de la composition de mortier par introduction d'énergie sur l'élément de fixation.

13. Procédé selon la revendication 11 ou 12, **caractérisé en ce que** l'on effectue l'introduction de chaleur à travers un chauffage par résistance et/ou un champ électrique, magnétique ou électromagnétique.